# EUROPEAN PATENT APPLICATION

(11) **EP 2 180 653 A1**
(43) Date of publication of application: **28.04.2010**
(21) Application number: 08167615.7
(22) Date of filing: 27.10.2008
(51) Int. Cl.: H04L 29/06

(54) **System and method for providing media content on demand via a network**

(71) Applicant: TouchDiva Corp. Ltd., Wan Chai, Hong Kong (CN)
(72) Inventor: Haaber, Bo Løje, DK-3460, Birkerød (DK); Melskens, Thomas Christian, DK-2800, Lyngby (DK)
(74) Representative: Jensen, Peter Kim

(57) **Abstract**

A system (1) for providing media content on demand via a network, such as the internet, comprises a subscriber unit (2), a backend computer system (3), and one or more media servers (4), the subscriber unit (2) and the backend computer system (3) being operable to communicate with each other and with the one or more media servers (4) through the network, wherein the subscriber unit (2) is operable to instruct the backend computer system (3) to request a media access key from the one or more media servers (4), wherein the media server (4) upon request from the backend computer system (3) provides the media access key, the media access key comprising information identifying the location of the media content and being activated to give access to the media content on the media server (4), and wherein the subscriber unit (2) is operable to receive the media access key through the medium of the backend computer system (3) and to directly request and receive the media content from the media server (4) using the media access key.

## Description

The invention relates to a system and method for distributing media content on demand via a network, such as the internet.

A number of solutions exist for the distribution of media content on demand via a digital network, such as the internet. Media content may be music, films, news, audio or video podcasts or the like. The media content is stored digitally as media content data on a media server. The media server may be operated by a content provider, which distributes the media content as encoded digital media content data to end users. At the end user the media content data may be decoded and converted into audio signals and/or video signals using suitable computer hardware and software.

In order to purchase media content on demand, a user may use a computer to connect to a web site of a content provider, select for example music from a catalogue and download the music for playing the music on the computer or for transferring it to a mobile unit for later use. Typically, the content provider charges the user per unit of accessed/downloaded media content using commonly available e-commerce systems. The content provider handles the payment of adequate royalties to the owners of the content.

The web site for purchasing media content may also be operated by a service provider, which retrieves the media content from the media server of the content provider and provides the media content to the user. This method of distribution requires large capacity hardware to be operated by the service provider in addition to the media server computer system operated by the content provider. Alternatively, the service provider may instruct the media server to stream the media content data directly to the computer of the user. In either case, in order to prevent unauthorised redistribution of the downloaded media content data, copy protection codes, such as DRM-codes, have to be added to the media content data. However, by adding copy protection codes to the media content data, the amount of data to be transferred from the media server to the user and consequently the amount of data to be stored/processed by the hardware of the user is/are increased.

The object of the invention is to provide a system and a method for the secure/controlled distribution of media content via a digital network, preventing the unauthorised access and/or redistribution of digital media content data, and improving the efficiency of the secure/controlled transfer of the media content data.

This is achieved by a system for distributing media content on demand via a network, such as the internet, the system comprising a subscriber unit, a backend computer system, and one or more media servers, the subscriber unit and the backend computer system being operable to communicate with each other and with the one or more media servers through the network, wherein the subscriber unit is operable to instruct the backend computer system to request a media access key from the one or more media servers, wherein the media server upon request from the backend computer system provides the media access key, the media access key comprising information identifying the location of the media content and being activated to give access to the media content on the media server, and wherein the subscriber unit is configured to receive the media access key through the medium of the backend server and to directly request and receive the media content from the media server using the media access key.

The subscriber unit is typically operated by a user, and may be located in a first location e.g. the home of the user. The backend computer system is typically operated by a service provider and may be located at a second location or distributed over a number of locations. The one or more media servers may be operated by one or more content providers and may be distributed over a number of further locations. In practice, the backend computer system may be configured to identify amongst the one or more media servers a media server that can provide the selected media content and to direct the request for the media access key only to the identified media server.

The system comprises two separate signal paths, a first signal path for controlling the access by retrieving a media access key via the backend system, and a second signal path for providing the media content bypassing the backend system. The first signal path may be used to effectively control access to the system and to the media content provided through the system. The second signal path is established directly between the subscriber unit and the media server for transferring the media content data from the media server to the subscriber unit. This has the advantage that the backend system does not have to handle the bulk stream of data, thereby substantially reducing the performance requirements for the hardware of the backend computer system.

A particular advantage of the system according to the invention is that the media content may be provided to a subscriber / subscriber unit in a controlled manner, yet keeping the identity of the subscriber / subscriber unit anonymous to the content provider operating the media server. Only the service provider operating the backend computer system needs to know the identity of the subscriber unit for securing payment for the media content provided to the subscriber / subscriber unit. Instead of providing the media server with the identity of the subscriber unit and instructing the media server to send media content directly to the subscriber unit, the media access key is provided to the subscriber unit through the medium of the backend computer system, i.e. the media server, which generates and activates the media access key, sends the media access key to the backend computer system, which takes care of forwarding the media access key to the correct subscriber unit, thereby allowing to secure payment for the requested media content while keeping the identity of the subscriber unit anonymous. Using the activated media access key comprising information on the location of the media server and the media content, the subscriber unit may then establish an anonymous connection to the media server for directly retrieving the media content.

Further according to one embodiment of a system according to the invention, the subscriber unit receives the media content from the media server as a stream. The stream of media content data is promptly converted into media output and presented to the user, thereby essentially eliminating the need for any local bulk storage capacity for storing media content data by the user while at the same providing access to a large amount of media content by the user. Furthermore, by avoiding that local copies of the media content data are produced at the location of the user, unauthorised redistribution of the media content is efficiently prevented.

Further according to one embodiment of a system according to the invention, the subscriber unit is uniquely identifiable. The subscriber unit may be identified by a hardware identification number/code, wherein the hardware identification number/code is accessible by software and may be requested by/transmitted to other computers on the network. Thereby each subscriber unit in a network may be addressed and/or controlled individually with reference to the unique hardware identification number/code.

Further according to one embodiment of a system according to the invention, the subscriber unit is configured to contact the backend computer system upon connection to the network in order to identify and register to the backend computer system, and to obtain authentication for communication with the backend computer system.

The authentication may be implemented as a user-id/key set for secure/authenticated communication between the subscriber unit and the backend system. Authentication may be subject to a successful verification of the subscription status, for example by verifying that a valid subscription exists for the subscriber unit requesting access to the backend computer system.

If the subscriber unit tries to establish a connection to the backend computer system for anything else but identification and/or registration, without using proper authentication in the form of a user-id/key set, the communication is refused or simply ignored by the backend computer system, thereby preventing the subscriber unit from accessing the system. Terminating the validity of the authentication thereby allows to immediately shut down the access of a subscriber unit to the backend computer system, thereby preventing the subscriber unit from being used in the system according to the invention.

One particularly advantageous effect of this direct control of the access of a subscriber unit to the system is that it works efficiently as a protection against theft or otherwise unauthorised use of the subscriber unit, since the subscriber unit may be deactivated as soon as any irregularity is registered. A de-activated subscriber unit will be denied access to the system and/or the backend computer system will simply not reply to any communication attempt from a subscriber unit that is not listed as active and/or properly authenticated.

Further, according to another embodiment of a system according to the invention, the authentication expires periodically and/or upon interruption of the communication between the subscriber unit and the backend computer system.

Preferably, the authentication expires and requires renewal in order to maintain the active status of the subscriber unit. The expiry may for example occur after a pre-determined period of time, thus requiring periodic renewal, e.g. on a monthly, weekly, daily or hourly basis.

Alternatively or supplemental to the periodic expiry, the authentication may expire every time the connection between the subscriber unit and the backend computer system is interrupted, requiring renewal of the authentication every time the subscriber unit is switched on, restarted or otherwise brought online. Thereby an improved protection against unauthorised access to the system is achieved.

The prompt expiry of the authentication after an interruption event occurs may be configured to occur after a time-out delay allowing for a rapid recovery within the delay period after short interruptions due to transient events, such as network fluctuations, erroneous unplugging of a cable, accidental switching off of a power supply, reset of the subscriber unit or the like.

Further, according to another embodiment of a system according to the invention, the backend computer system comprises a register of subscriber units that are attributed an active status, the active status of each of the subscriber units being subject to a successful validation of a subscription status of the subscriber unit.

Advantageously, the backend computer system maintains a register of all the subscriber units that may rightfully connect to the backend computer system and request its services. The subscriber units that are listed in said register are referred to as active subscriber units/subscriber units having an active status.

A subscriber unit may be added to or kept in the register subject to the condition that a valid subscription is available for the subscriber unit, and consequently subject to the condition that the backend computer system can obtain a successful validation of the subscription status for that subscriber unit.

The subscription status registers the right of the subscriber unit to access the system in order to retrieve media content. The subscription status may be an entry in a register of subscribers, the register being maintained on the backend computer system or a separate server to which the backend computer has access. The entry may be connected to a user account and/or established when a user purchases a subscription to the system and in return for an e.g. yearly, quarterly, monthly, weekly or on-off payment is granted access to the system, for a given period of time. The subscription may expire automatically after the subscription period or may be terminated by the service provider, for example due to missing payments

Further, according to another embodiment of a system according to the invention, the backend computer system verifies access rights of the subscriber unit to the media content and makes the request for a media access key subject to the successful verification of the access rights.

The rights of the subscriber unit to access media content via the system may depend on the subscription that is linked to the subscriber unit. Apart from a limitation in time by the subscription period, the subscription may for example also be limited geographically and/or by the type/genre of media content.

Further, according to another embodiment of a system according to the invention, the media server deactivates the media access key promptly after expiry of a pre-determined access delay and/or after single use.

Inherently, a time delay between the generation of the media access key at the media server and the use of the media access key for the retrieval of media content is caused by the communication path including the steps of transferring the media access key from the media server via the backend system to the subscriber unit and further using the media access key in order to request the media content from the media server. Advantageously, after a typical time delay for performing these steps, the media access key is deactivated in order to avoid unauthorised use of the media access key at a later time.

The access delay may be of the order of minutes or seconds. In most practical cases, an access delay of about one second between the generation of the media access key and the deactivation of the media access key by the media server is sufficient for the subscriber unit to retrieve the media access key via the backend computer system and to request the media content directly from the media server using the media access key.

Alternatively or supplementary to the deactivation of the media access key after a pre-determined time delay, the media access key may also be deactivated upon single successful use, i.e. promptly after the media server has registered the first successful use of the media access key for retrieving the media content, thereby preventing unauthorised access.

Further, according to another embodiment of a system according to the invention, the backend computer system is configured to run an application server providing functionality to the subscriber unit, the functionality comprising functionality for searching and/or browsing and/or selecting media content.

Using the functionality provided by the backend computer server, a user of the subscriber unit may find and select the desired media content at the subscriber unit. Based on that user input, the subscriber unit then retrieves a media access key for the selected media content by the medium of the backend computer system as discussed above.

Typically, the subscriber unit is located in the home of a user, whereas the backend computer system is operated by the service provider at one or more different locations. By operating the subscriber unit as a client to an application server on the backend computer system, the service provider may centrally control, adapt, maintain, and/or update the functionality of the subscriber unit in a very efficient manner without the need for installing new software on the subscriber unit.

Furthermore, the subscriber unit is easily shut down by denying access to the application server e.g. upon expiry of subscription or when an unauthorised use of the subscriber unit is registered.

Further, according to another embodiment of a system according to the invention, the application server adapts the functionality based on a user profile.

The user profile may comprise pre-configurable preferences that may be maintained via a separate private web-site giving a user access to a personal account for editing preferences, purchasing or otherwise configuring subscriptions, and the like. The user profile may further comprise information on usage statistics that may be analysed e.g. for the purpose of adapting user preferences in an automated manner. The user profile may further comprise advertisement goals that may for example be defined by the user and/or the service provider.

Advantageously, based on the user profile, the application server may provide filters for displaying and/or searching preferred types of media content.

Further advantageously, based on the user profile and optionally depending on further advertisement goals, the backend computer system may present recommendations and/or advertisement to the user of the subscriber unit.

Further, according to another embodiment of a system according to the invention, the backend computer system is operable to maintain a catalogue of media content available from each of the media servers.

In order to maintain an updated catalogue of media content available from each of the media servers, the backend computer system continually retrieves from each of the media servers an index of the media content available from that media server. The retrieved index data may then be combined into a single catalogue and provided to the subscriber unit by means of a catalogue server operated on the backend computer system.

Further, according to one aspect of the invention, a subscriber unit for use in the above-mentioned system is disclosed, the subscriber unit comprising
- display means, means for entering user input, a network interface, processor and memory means,
- an authentication module configured to uniquely identify and/or register the subscriber unit to a backend computer system for authentication purposes,
- a selection client operable to select media content from a catalogue on the backend computer system in response to user input at the subscriber unit,
- a media request client configured to receive a media access key to the selected media content from the backend computer system, the media access key comprising information identifying the location of the media content on the network, such as a universal resource identifier (URI), and to request the selected media content directly from a media server using the media access key received via the backend computer system, and
- means for converting media content streamed from the media server to the subscriber unit into media output.
   In order to operate the subscriber unit in a system as mentioned above, the subscriber unit is connected to the network via the network interface. Upon connection, the authentication module identifies and/or registers the subscriber unit to the backend computer system authenticating the subscriber unit. The authentication may be implemented as a user-id/key set for secure communication between the subscriber unit and the backend system.
   Once communication is established between the subscriber unit and the backend system, a selection client displays information from the catalogue on the display means and a user may enter his choice at the subscriber unit using the input means, such as a touch screen panel. Based on the user input, the selection client selects the media content in the catalogue on the backend computer system and instructs the backend computer to request the corresponding media access key from the media server that can provide the media content.
   The media request client receives the media access key from the backend computer system and uses the information about the location of the media content contained in the media access key to directly retrieve the media content from the media server, e.g. in the form of a media content data stream. The retrieved media content data is converted by decoding means, and converted into media output, such as analogue audio signals and/or video signals.
   Further, according to another aspect of the invention, a backend computer system for use in the above-mentioned system is disclosed, the backend computer system comprising
- a validation module operable to register the uniquely identified subscriber unit and to provide authentication to the subscriber unit,
- a catalogue server maintaining a catalogue of media content available from the one or more media servers and making the catalogue accessible to the subscriber unit,
- an application server providing functionality to the subscriber unit for searching and/or browsing and/or selecting media content from the catalogue, and
- a media access key retrieval module operable to identify a media server that can provide the selected media content, request and receive the media access key to the selected media content from the identified media server, and forward the media access key to the subscriber unit.
   The backend computer system is typically operated by a service provider and may be connected to the above mentioned system for providing media content on demand via the network.
   The validation module handles identification and registration requests received from the subscriber unit via the network. When the validation module accepts the identity of the subscriber unit as valid, the subscriber unit is registered as active and authentication is provided to the subscriber unit. As mentioned previously, the authentication may be implemented as a user-id/key set for secure/authenticated communication between the subscriber unit and the backend computer system. The validation module may verify a subscription status and provide authentication depending on the access rights according to the subscription status.
   The catalogue server provides information on the available media content to the subscriber unit and the application server provides functionality to the subscriber unit for searching and/or browsing and/or selecting media content as explained previously.
   The media access key retrieval module retrieves a media access key from the appropriate media server that can provide the selected media content and forwards the media access key to the subscriber unit.
   Further, according to yet another aspect of the invention, a media server for use in the above-mentioned system is disclosed, the media server comprising
- media content data and an index of the media content data available from the media server,
- a media access key request handler operable upon request from a backend computer system to provide a media access key for selected media content to the backend computer system, the media access key comprising information identifying the location of the media content on the network, and
- a streaming engine operable to transmit/stream the media content data to a subscriber unit via a network upon request from the subscriber unit.

The media server stores the media content data and maintains an index of the stored media content. In operation, the media server is connected to the above-mentioned system for providing media content on demand via the network.

The index may be provided to the backend computer system for maintenance of the catalogue of available media content.

The media access key request handler receives requests from the backend system identifying media content that has been selected for retrieval by the subscriber unit. The media access request handler responds to the request by generating and activating a media access key, and sending the media access to the requesting backend computer system, which forwards the media access key to the subscriber unit as discussed above.

The media access key comprises information about the location of the media on the network, typically in the form of a universal resource identifier (URI), allowing the subscriber unit to directly request the media content from the media server in the form of a data stream provided by the streaming engine of the media server.

According to a further aspect of the invention, a method is disclosed for providing media content on demand via a network, such as the internet, using a system comprising a subscriber unit, a backend computer system and one or more media servers, the subscriber unit and the backend computer system being operable to communicate with each other and with the one or more media servers through the network, the method comprising the following steps, wherein
a) the subscriber unit instructs the backend computer system to request a media access key from the one or more media servers,
b) the media server, upon request from the backend computer system, provides the media access key to the backend computer system, the media access key comprising information identifying the location of the media content and being activated to give access to the media content on the media server,
c) the backend system forwards the media access key to the subscriber unit,
d) the subscriber unit retrieves the media content as media content data directly from the media server using the media access key.

As explained in detail above with respect to the system for providing media content on demand via a network, correspondingly, the method according to the invention achieves the same advantages as mentioned above. In particular it is achieved, that the media content is provided on demand via a digital network in a secure/controlled manner, preventing the unauthorised access and/or redistribution of digital media content data, and improving the efficiency of the secure/controlled transfer of the media content data.

Further embodiments of the method according to the invention follow from the dependent method claims and are disclosed below. The further embodiments of the method according to the invention may be implemented using the corresponding embodiments of the system for providing media content on demand via a network. The same advantages as discussed above with reference to the corresponding embodiments of the system are achieved by the further embodiments of the method.

Advantageously according to one embodiment of the invention, the media content data is streamed to the subscriber unit.

Advantageously according to a further embodiment of the invention, the communication between the subscriber unit and the backend computer system is authenticated by the backend computer system.

Further, according to another embodiment of the invention, the authentication expires periodically and/or upon interruption of the communication between the subscriber unit and the backend computer system.

Advantageously according to a further embodiment of the invention, the media server deactivates the media access key promptly after expiry of a pre-determined access delay and/or after single use.

Further, according to another embodiment of the invention, prior to step a) the subscriber unit selects media content from a catalogue on the backend computer system in response to user input at the subscriber unit and/or according to a playlist. The subscriber unit may for example directly react on a single choice of a user by presenting the chosen media content, or collect a number of choices into a playlist, or retrieve a playlist from the backend computer system. Playlists may also be created dynamically depending on a user profile and/or a recommendation profile and/or an advertisement profile and/or hit list charts.

In the following, the invention is explained in detail by way of an example with reference to the drawing. The drawing shows in
Fig. 1 a system for distributing media content via the internet,
Fig. 2 schematically, the hardware components of one embodiment of a subscriber unit according to the invention, and
Fig. 3 a diagram of a method for retrieving media content via a network according to one embodiment of the invention.

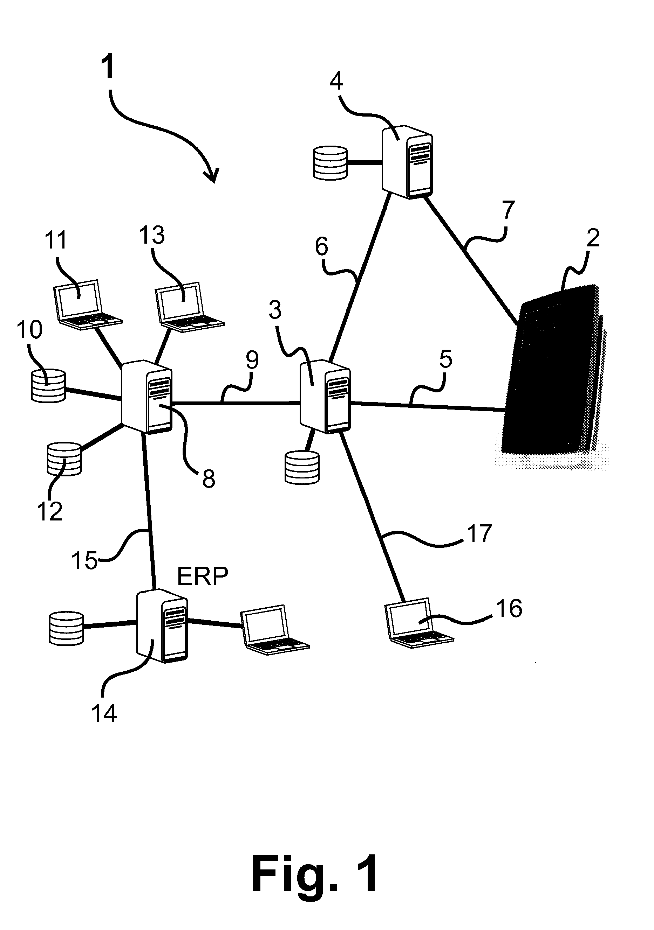

Fig. 1 shows an embodiment of a system 1 according to the invention comprising a number of subscriber units 2, a backend computer system 3, and media servers 4. Each of the subscriber units 2 may establish a network connection 5 for communication with the backend computer system 3 and a network connection 7 for communication with a media server 4. The backend computer system 3 may communicate with the media server 4 via a network connection 6.

Upon connection to the system 1, the subscriber unit 2 identifies itself through connection 5 to the backend computer system 3 and registers. The backend computer system provides authentication and a secure communication is established via network connection 5. Through network connection 5 the backend computer system 3 may provide information and functionality, for example a catalogue of available media content, news, playlists, information on the current record played, search and selection functions, display configuration and layout facilitating user input, and the like.

The catalogue of available media content is maintained on the backend computer system by synchronising the catalogue with the index of media content available from each of the media servers 4. The catalogue may be presented on the display of the subscriber unit 4. A user may choose media content from the catalogue displayed at the subscriber unit and input the choice using input means of the subscriber unit 2, such as a touch screen. The backend computer system 3 identifies the appropriate media server 4 that can provide the chosen media content using the above-mentioned catalogue. Via network connection 5, the subscriber unit 2 may then instruct the backend computer system 3 to request a media access key for the media content from the appropriate media server 4 via network connection 6.

The media server 4 generates and activates the media access key comprising information about the location of the selected media content and returns the media access key via network connection 6 to the backend computer system 3, which forwards the media access key to the subscriber unit 2 via network connection 5. The information about the location of the media content is typically provided in the form of a universal resource identifier (URI) allowing to locate the media content via the network. Using the media access key, the subscriber unit 2 establishes a network connection 7 to the media server 4 and requests the media content directly from the location on the media server 4 as specified in the media access key. Responding to the request from the subscriber unit 2, the media server 4 then streams the media content via the network connection 7 to the subscriber unit 2.

The backend computer system may be connected to a web server 8 through a network connection 9. The web server 8 may perform a number of administrative, marketing and sales related tasks. For example, the web server 8 may provide a marketing content management system for presenting marketing information on a public web site 11. The web server may further handle ordering and payment in a ordering and payment content management system 12 interacting with a private web site 13. On the private web site 13, a user may purchase and activate subscriber units 2, and subscribe to media content services, such as music subscriptions, video, news or the like. Access to the private web site 13 is typically login/password protected and may further handle user account information, such as user preferences, subscription information, advertisement preferences, and the like.

The user account information, in particular the information related to the operation of the subscriber unit 2, may be synchronised between the backend computer system 3 and the web server 8 via the network connection 9.

The public web site 11 and the private web site 13 are usually accessed from a users computer separate from the subscriber unit 2. However, it may also be conceived that the subscriber unit is provided with browser functionality allowing a user to access the web sites 12, 13 using the hardware of the subscriber unit 2.

Handling of orders placed through the private web site 13 and of corresponding payments may be outsourced to a electronic retail provider 14 linked to the web server 9 via a connection 15 for synchronisation of ordering and payment data.

The backend computer system 3 may be accessed remotely from an administration system 16 through a network connection 17. The administration system 16 may perform common web maintenance tasks, update software on the backend computer system 3, create play lists, view and analyse reports of data collected on the backend computer system 3, view and analyse media content retrieved, perform data mining on data collected on the backend computer system 3 and the like.

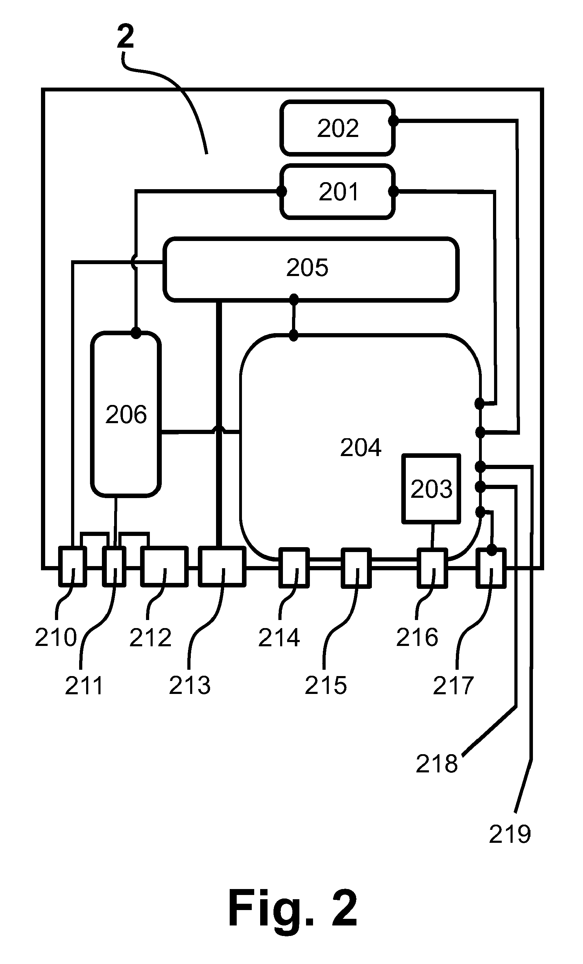

Fig. 2 shows schematically the hardware components and their connections for a preferred embodiment of a subscriber unit 2 according to the invention. The subscriber unit 2 comprises an LCD panel display 201 and a touch screen 202 for user input, a network interface 203, processor and memory means 204, an audio amplifier 205, and a power supply 206. Furthermore, the subscriber unit 2 may be provided with an amplifier switch 210, a power switch 211, a mains input 212, speaker binding posts 213, a line out connector 214, a video output 215, LAN connector, a reset switch 217 for resetting the processor and memory means 204, a remote control receiver 218, and one or more status indicator LEDs for displaying an operational status of the subscriber unit.

In order to avoid unauthorised redistribution of the media content data that the subscriber unit 2 retrieves from the network, the subscriber unit 2 only comprises limited memory. The subscriber unit 2 does not comprise bulk storage means, such as a hard disk or a large memory module suitable for storing media content data in the subscriber unit 2. Memory means are provided in connection with the processor means for storing the operating system, client software, further software and data related to the operation of the subscriber unit, and to provide a buffer for the receiving and processing streamed data. The essential parts of the functionality of the subscriber unit 2, in particular the parts of the functionality related to selecting and requesting media content on demand via the network, are provided by an application server on the backend computer system (not shown in Fig. 2) that is operated and thus controlled by the service provider.

The processor and memory means 204 comprise an authentication module (not shown) configured to uniquely identify and/or register the subscriber unit 2 to the backend computer system 3. As soon as the subscriber unit 2 is powered up/brought online, the authentication module may contact the backend system 3 and send a hardware identification code of the subscriber unit 2to the backend computer system 3. If the hardware identification code can be associated to a valid subscription, the authentication module receives a user-id, generates an authentication key, and a secure/authenticated communication may be established between the subscriber unit 2 and the backend system 3 using the user-id / key set. Furthermore, the processor and memory means 204 comprises client modules for selecting and requesting media content.

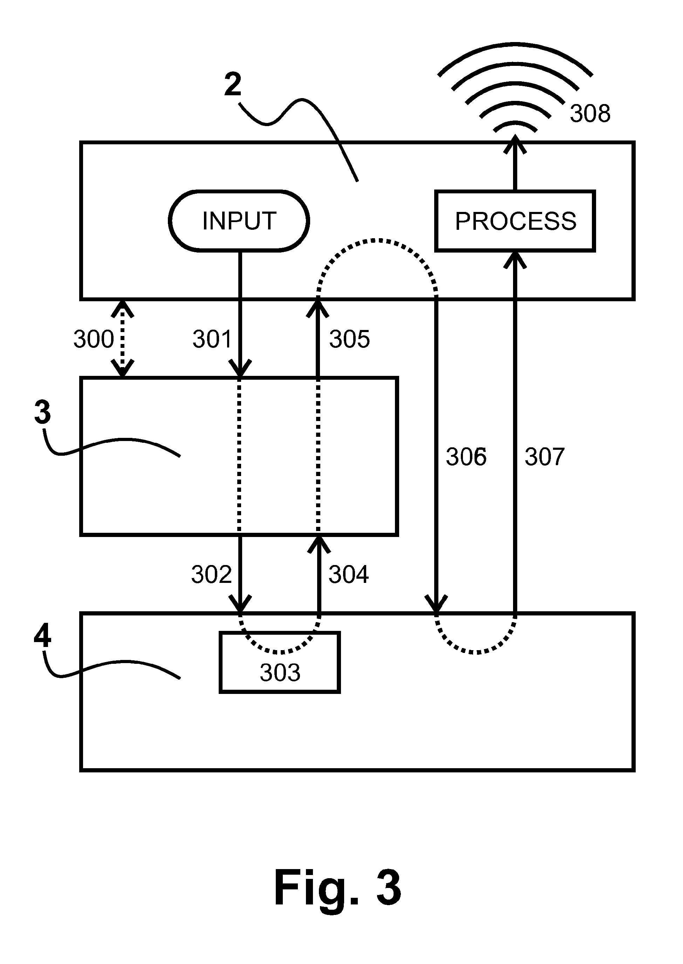

In the diagram of Fig. 3 a system comprising a subscriber unit 2, a backend system 3, and a media server 4 is used to implement an embodiment of the method for providing media content on demand via a network. After secure/authenticated communication has been established between the subscriber unit 2 and the backend computer system 3 in an initial authentication step 300, the subscriber unit 2 may in response to user input select media content from a catalogue provided by the backend computer system 3 and send the selection 301 to the backend computer system 3, thereby instructing the backend computer system 3 to send a request 302 for a media access key for the selected media content to the media server 4. A media access key request handler 303 generates and activates the media access key for the selected media content and sends the media access key to the backend computer system 3 in a reply 304. The backend computer system 3 forwards the media access key to the subscriber unit 2 in a communication 305. The media access key is then used in a request 306 directed from the subscriber unit 2 to the media server 4 in order to request the selected media content from the media server 4. If the media access key of the request 306 matches an activated media access key, the media server 4 replies to the request 306 by streaming media content data corresponding to the media access key to the requesting subscriber unit 2, where the media content data is processed to create a presentation 308 of the media content at the subscriber unit 2.

### List of reference numbers

- 1: system
- 2: subscriber unit
- 3: backend computer system
- 4: media server
- 5, 6, 7: network connection
- 8: web server
- 9: network connection
- 10: marketing content management system
- 11: public web site
- 12: purchase and ordering content management system
- 13: private web site
- 14: electronic retail provider
- 15: network connection
- 16: administration system
- 17: network connection
- 201: display
- 202: touch screen
- 203: network interface
- 204: processor and memory means
- 205: amplifier
- 206: power supply
- 210, 211, 217: switches
- 212, 213, 214, 215, 216: connectors
- 218: remote control receiver
- 219: status indicator
- 301: selection
- 302: request
- 304: reply
- 305: communication
- 306: request
- 307: reply
- 308: presentation

## Claims

1. System for providing media content on demand via a network, such as the internet, the system (1) comprising a subscriber unit (2), a backend computer system (3), and one or more media servers (4), the subscriber unit (2) and the backend computer system (3) being operable to communicate with each other and with the one or more media servers (4) through the network,
wherein the subscriber unit (2) is operable to instruct the backend computer system (3) to request a media access key from the one or more media servers (4),
wherein the media server (4) upon request from the backend computer system (3) provides the media access key, the media access key comprising information identifying the location of the media content and being activated to give access to the media content on the media server (4), and
wherein the subscriber unit (2) is configured to receive the media access key through the medium of the backend computer system (3) and to directly request and receive the media content from the media server (4) using the media access key.

2. System according to claim 1, wherein the subscriber unit (2) receives the media content from the media server (4) as a stream.

3. System according to any of the claims 1 - 2, wherein the subscriber unit (2) is uniquely identifiable.

4. System according to claim 3, wherein the subscriber unit (2) is configured to contact the backend computer system (3) upon connection to the network in order to identify and register to the backend computer system (3), and to obtain authentication for communication with the backend computer system (3).

5. System according to claim 4, wherein the authentication expires periodically and/or upon interruption of the communication between the subscriber unit (2) and the backend computer system (3).

6. System according to any of the claims 3 - 5, wherein the backend computer system (3) comprises a register of subscriber units (2) that are attributed an active status, the active status of each of the subscriber units (2) being subject to a successful validation of a subscription status of the subscriber unit (2).

7. System according to any of the preceding claims, wherein the backend computer system (3) verifies access rights of the subscriber unit (2) to the media content and makes the request for a media access key subject to the successful verification of the access rights.

8. System according to any of the preceding claims, wherein the media server (4) deactivates the media access key promptly after expiry of a pre-determined access delay and/or after single use.

9. System according to any of the preceding claims, wherein the backend computer system (3) is configured to run an application server providing functionality to the subscriber unit (2), the functionality comprising functionality for searching and/or browsing and/or selecting media content.

10. System according to claim 9, wherein the application server adapts the functionality based on a user profile.

11. System according to any of the preceding claims, wherein the backend computer system (3) is operable to maintain a catalogue of media content available from each of the media servers (2).

12. Subscriber unit for use in a system (1) according to any of the claims 1 - 11, the subscriber unit (2) comprising
- display means (201), means for entering user input (202), a network interface (203), processor and memory means (204),
- an authentication module configured to uniquely identify and/or register the subscriber unit (2) to a backend computer system (3) for authentication purposes,
- a selection client operable to select media content from a catalogue on the backend computer system (3) in response to user input at the subscriber unit (2),
- a media request client configured to receive a media access key to the selected media content from the backend computer system (3), the media access key comprising information identifying the location of the media content on the network, such as a universal resource identifier (URI), and to request the selected media content directly from a media server (4) using the media access key received via the backend computer system (3), and
- means for converting media content streamed from the media server (4) to the subscriber unit (2) into media output.

13. Backend computer system for use in a system (1) according to any of the claims 1 - 11, the backend computer system (3) comprising
- a validation module operable to register a uniquely identified subscriber unit (2) and to provide authentication to the subscriber unit (2),
- a catalogue server maintaining a catalogue of media content available from the one or more media servers (4) and making the catalogue accessible to the subscriber unit (2),
- an application server providing functionality to the subscriber unit (2) for searching and/or browsing and/or selecting media content from the catalogue, and
- a media access key retrieval module operable to identify a media server (4) that can provide the selected media content, request and receive the media access key to the selected media content from the identified media server (4), and forward the media access key to the subscriber unit (2).

14. A media server for use in a system according to any of the claims 1 - 11, the media server (4) comprising
- media content data and an index of the media content data available from the media server (4),
- a media access key request handler operable upon request from a backend computer system (3) to provide a media access key for selected media content to the backend computer system (3), the media access key comprising information identifying the location of the media content on the network, and
- a streaming engine operable to transmit/stream the media content data to a subscriber unit (2) via a network upon request from the subscriber unit (2).

15. A method for providing media content on demand via a network, such as the internet, using a system (1) comprising a subscriber unit (2), a backend computer system (3) and one or more media servers (4), the subscriber unit (2) and the backend computer system being operable to communicate with each other and with the one or more media servers (4) through the network,
the method comprising the following steps, wherein
a) the subscriber unit (2) instructs the backend computer system (3) to request a media access key from the one or more media servers (4),
b) the media server (4), upon request from the backend computer system (3), provides the media access key to the backend computer system (3), the media access key comprising information identifying the location of the media content and being activated to give access to the media content on the media server (4),
c) the backend system (3) forwards the media access key to the subscriber unit (2),
d) the subscriber unit (2) retrieves the media content as media content data directly from the media server using the media access key.

16. Method according to claim 15, wherein the media content data is streamed to the subscriber unit (2).

17. Method according to any of the claims 15 - 16, wherein the communication between the subscriber unit (2) and the backend computer system (3) is authenticated by the backend computer system (3).

18. Method according to claim 17, wherein the authentication expires periodically and/or upon interruption of the communication between the subscriber unit (2) and the backend computer system (3).

19. Method according to any of the claims 15 - 18, wherein the media server (4) deactivates the media access key promptly after expiry of a pre-determined access delay and/or after single use.

20. Method according to any of the claims 15 - 19, wherein prior to step a) the subscriber unit (2) selects media content from a catalogue on the backend computer system (4) in response to user input at the subscriber unit (4) and/or according to a playlist.
